# DEMANDE DE BREVET EUROPEEN

(11) **EP 1 306 567 A1**
(43) Date de publication de la demande: **02.05.2003**
(21) Numéro de dépôt: 02356202.8
(22) Date de dépôt: 16.10.2002
(51) Int. Cl.: F16C 17/20, F16C 33/30, F16C 21/00, F04D 19/04, F16C 32/04, F16C 39/06

(54) **Utilisation des billes en zircone pour les roulements d' atterrissage des pompes turbomoléculaires sur palier magnétique**

(30) Priorité: 25.10.2001 FR 0113803
(71) Demandeur: ALCATEL, 75008 Paris (FR)
(72) Inventeur: Mathes, Rainer, 74160 St.Julien en Genevois (FR); Bouille, André, 74000 Annecy (FR)
(74) Mandataire: Poncet, Jean-François

(57) **Abrégé**

Selon l'invention, un roulement d'atterrissage pour pompe à vide comprend une bague de roulement de rotor (12) et une bague coaxiale de roulement de stator (13) entre lesquelles sont disposés des éléments roulants (14a, 14b, 14c, 14d) logés les uns à la suite des autres et venant rouler sur des pistes de roulement respectives des bagues de roulement de rotor (12) et de stator (13). Les éléments roulants comprennent une succession d'éléments roulants dont la surface externe est en dioxyde de zirconium. On réduit ainsi la résistance à l'accélération du roulement d'atterrissage, tout en assurant une bonne résistance aux agressions chimiques par les gaz et plasmas de procédés.

## Description

La présente invention concerne la suspension des rotors des pompes à vide, en particulier la suspension des rotors des pompes turbomoléculaires.

Dans les pompes à vide, un rotor mobile en rotation dans un stator est tenu par des paliers magnétiques qui, en fonctionnement normal, maintiennent en position radiale centrée le rotor dans le stator selon une précision de maintien normal centré, sans contact mécanique entre le rotor et le stator. Les paliers magnétiques comportent des électroaimants alimentés en énergie électrique par des circuits appropriés assurant un asservissement de position radiale du rotor dans le stator.

L'efficacité du maintien radial du rotor dans le stator est déterminée par la force des électroaimants, et le maintien nécessite l'alimentation suffisante des électroaimants en énergie électrique.

Il peut se produire parfois un défaut ou une insuffisance de fonctionnement normal des paliers magnétiques, par exemple lors d'une contrainte subite et importante sur le rotor ou lors d'une interruption de l'alimentation électrique des électroaimants. Dans ce cas, les paliers magnétiques n'assurent plus la fonction de centrage du rotor, et il se produit une étape "d'atterrissage" dans laquelle le rotor passe d'un état de maintien sans contact mécanique à un état de maintien par contact mécanique. Au cours de cet atterrissage, le rotor tend à venir en contact du stator. Par suite de la rotation très rapide du rotor, par exemple supérieure à 30 000 tours par minute pour les pompes turbomoléculaires actuelles, un tel contact peut provoquer la destruction de la pompe à vide.

Pour résoudre ce problème, on a déjà prévu d'équiper les pompes à vide avec des paliers mécaniques secondaires d'atterrissage à roulement qui, à défaut de fonctionnement normal des paliers magnétiques, limitent les déplacement radiaux du rotor dans le stator en assurant un centrage approximatif du rotor et en limitant les mouvements radiaux du rotor à une valeur inférieure à l'entrefer des paliers magnétiques. Un exemple d'une telle pompe à vide est décrit dans le document GB 2 348 680 A. Le matériau constituant les éléments roulants du palier d'atterrissage n'est pas divulgué.

Les paliers mécaniques secondaires d'atterrissage sont situés à l'intérieur de la pompe à vide. Ils peuvent en conséquence être exposés à des gaz ou plasmas corrosifs qui traversent la pompe à vide lors de son utilisation dans les procédés de fabrication de semi-conducteurs. De tels gaz ou plasmas corrosifs sont susceptibles de provoquer la dégradation plus ou moins rapide du palier mécanique secondaire d'atterrissage, qui n'est alors plus capable d'assurer la fonction de centrage approximatif du rotor en cas d'atterrissage.

Il existe donc un besoin pour augmenter la résistance du palier mécanique secondaire d'atterrissage aux agressions chimiques des gaz ou plasmas de procédés. Pour cela, on a utilisé avec succès des paliers mécaniques secondaires d'atterrissage dont les roulements comprennent des bagues de roulement en acier inoxydable, et des billes également en acier inoxydable.

Mais on a pu constater que le nombre d'atterrissages possibles sans dégradation sensible de tels paliers mécaniques en acier inoxydable reste limité, ce qui réduit la fiabilité de la pompe à vide et augmente la fréquence des opérations de maintenance. En réalité, les défauts de fiabilité des paliers mécaniques d'atterrissage à roulement en acier inoxydable résultent de la résistance à l'accélération du roulement d'atterrissage.

En effet, en fonctionnement normal des paliers magnétiques ayant des paliers mécaniques d'atterrissage montés sur le stator, les roulements des paliers mécaniques d'atterrissage sont à l'arrêt, solidaires du stator ; lors de l'interruption de fonctionnement des paliers magnétiques, le rotor vient au contact des bagues intérieures encore immobiles des paliers mécaniques d'atterrissage, et entraîne en rotation les bagues intérieures des roulements et les éléments roulants situés entre les bagues intérieures et les bagues extérieures ; par l'effet de la résistance à l'accélération du roulement d'atterrissage, la vitesse de rotation des bagues intérieures n'augmente que progressivement, de sorte qu'un glissement se produit entre le rotor et les bagues intérieures des paliers mécaniques d'atterrissage. Il en résulte inévitablement une usure des surfaces respectives en contact du rotor et des bagues intérieures des paliers mécaniques d'atterrissage, ce qui progressivement augmente les jeux et réduit l'efficacité du dispositif ; en outre, les frottements entre les différentes pièces provoquent l'apparition possible de copeaux ou de limaille qui risquent de bloquer les éléments roulants du palier mécanique.

Les phénomènes d'usure et leurs conséquences sont d'autant plus accentués lorsque les bagues intérieures des paliers mécaniques d'atterrissage subissent des phénomènes s'opposant à leur accélération rapide en rotation pour atteindre le plus tôt possible la vitesse de rotation du rotor.

A cet égard, une première cause de résistance à l'accélération du roulement d'atterrissage est son inertie. Des tentatives ont été faites pour réduire l'inertie des roulements d'atterrissage, en utilisant des éléments roulants ayant une plus faible masse. C'est ainsi qu'on a imaginé de remplacer les éléments roulants traditionnels tels que des billes en acier inoxydable par des billes en céramique, de densité très inférieure à l'acier.

S'agissant d'éléments roulants qui doivent être capables de supporter une très grande vitesse de rotation, induisant des contraintes mécaniques sévères, les fabricants de billes pour roulement à bille préconisent d'utiliser comme céramique le nitrure de silicium. Cette céramique présente l'avantage d'avoir une faible densité, assurant une très faible inertie. Egalement, cette céramique présente un coefficient de dilatation faible, ce qui est avantageux pour garantir un bon fonctionnement du palier mécanique secondaire d'atterrissage dans les conditions de température habituelles. Egalement, cette céramique présente une conductivité thermique relativement grande, qui favorise le refroidissement du palier mécanique secondaire d'atterrissage.

Malheureusement, les céramiques, et en particulier le nitrure de silicium, sont rapidement dégradées par les gaz ou plasmas que l'on utilise dans les nouveaux procédés sur les machines de fabrication de semi-conducteurs. Ces machines utilisent en effet des plasmas de haute densité en combinaison avec des gaz tels que le NF3 qui attaquent dans leur forme atomique (F⁺) la céramique nitrure de silicium Si₃N₄. On constate que de tels paliers mécaniques secondaires d'atterrissage avec des billes en nitrure de silicium doivent être changés au plus tard après six mois d'utilisation, à cause de la corrosion des billes.

Le problème proposé par la présente invention est de concevoir une nouvelle structure de palier mécanique secondaire d'atterrissage à roulement pour pompes à vide à grande vitesse, qui présente une longévité accrue pour permettre un plus grand nombre d'atterrissages et une plus grande durée de fonctionnement sans défaut dans les conditions d'utilisation en présence de gaz ou plasmas agressifs.

Pour cela, l'invention prévoit une structure particulière permettant à la fois de réduire au mieux la résistance à l'accélération du roulement d'atterrissage, et d'assurer une résistance satisfaisante aux agressions chimiques des gaz ou plasmas de procédés de semi-conducteurs.

Pour atteindre ces objets ainsi que d'autres, l'invention prévoit une structure de pompe à vide comprenant un rotor mobile en rotation dans un stator, avec au moins un palier magnétique radial qui, en fonctionnement normal, maintient en position radiale centrée le rotor dans le stator, et avec au moins un palier mécanique d'atterrissage à roulement d'atterrissage qui, à défaut de fonctionnement normal des paliers magnétiques radiaux, limite les déplacements radiaux du rotor dans le stator en assurant un centrage approximatif du rotor, un jeu radial étant prévu entre l'une des bagues de roulement de rotor ou de stator et une portée d'appui correspondante du rotor ou du stator, le roulement d'atterrissage comprenant :
- une bague de roulement de rotor et une bague coaxiale de roulement de stator qui définissent entre elles un logement de roulement,
- des éléments roulants logés les uns à la suite des autres dans le logement de roulement et venant rouler sur des pistes de roulement respectives des bagues de roulement de rotor et de stator ;
selon l'invention certains au moins des éléments roulants comprennent une surface externe en dioxyde de zirconium qui assure à la fois une résistance mécanique satisfaisante et une protection contre les agressions chimiques.

Le zircone ou dioxyde de zirconium, est généralement utilisé pour des paliers ou roulements dans lesquels les vitesses de rotation sont très faibles. Les fabricants de billes pour roulements ne préconisent jamais l'utilisation du dioxyde de zirconium dans les cas où les vitesses de rotation sont élevées et induisent des contraintes mécaniques sévères. Plusieurs caractéristiques du dioxyde de zirconium sont défavorables dans l'application à des roulements à grande vitesse, et dissuadent quiconque de l'utiliser a priori pour des roulements d'atterrissage de pompe turbomoléculaire : son coefficient de dilatation est relativement élevé, environ trois fois supérieur à celui du nitrure de silicium qui est habituellement préconisé ; sa masse spécifique est plus élevée, entraînant une augmentation d'inertie ; sa faible conductivité thermique est défavorable pour le refroidissement d'un palier mécanique.

De manière étonnante, malgré ces paramètres défavorables, les inventeurs ont utilisé avec succès le dioxyde de zirconium, en obtenant des performances mécaniques satisfaisantes, similaires à celles des roulements avec billes en nitrure de silicium, tout en offrant une grande résistance à la corrosion par les gaz ou plasmas tels que le fluor atomique.

Selon un mode de réalisation avantageux, les éléments roulants qui comportent une surface externe en dioxyde de zirconium présentent une structure massive, entièrement constituée de dioxyde de zirconium.

Selon un mode de réalisation simplifié, les éléments roulants sont des billes sphériques.

Selon un premier mode de réalisation, les éléments roulants présentent tous une surface externe en dioxyde de zirconium.

Selon un second mode de réalisation, les éléments roulants comprennent une succession alternée d'éléments roulants en acier et d'éléments roulants en dioxyde de zirconium.

De préférence, les éléments roulants en acier sont constitués d'acier inoxydable.

Les pistes de roulement peuvent être en acier inoxydable.

Les éléments roulants peuvent avoir tous sensiblement le même diamètre lorsque le roulement est dans les conditions de températures normales de fonctionnement. Les températures normales de fonctionnement sont habituellement de l'ordre de 60°C à 90°C. Pour cela, on prévoit que les éléments roulants en dioxyde de zirconium ont, à température ambiante, un diamètre légèrement supérieur au diamètre des éléments roulants en acier, pour compenser les différences de coefficient de dilatation thermique du dioxyde de zirconium et de l'acier.

D'autres objets, caractéristiques et avantages de la présente invention ressortiront de la description suivante de modes de réalisation particuliers, faite en relation avec les figures jointes, parmi lesquelles:
- la figure 1 est une vue générale en coupe longitudinale d'une pompe à vide dont le rotor est tenu par des paliers magnétiques et par des paliers mécaniques d'atterrissage associés ;
- la figure 2 est une vue de détail en coupe agrandie de la zone A de la figure 1, illustrant un demi-palier mécanique d'atterrissage à roulement selon un mode de réalisation de la présente invention ;
- la figure 3 est une vue de face agrandie d'un roulement d'atterrissage selon un mode de réalisation de l'invention ; et
- la figure 4 est une vue en perspective en coupe partielle du roulement d'atterrissage de la figure 3.

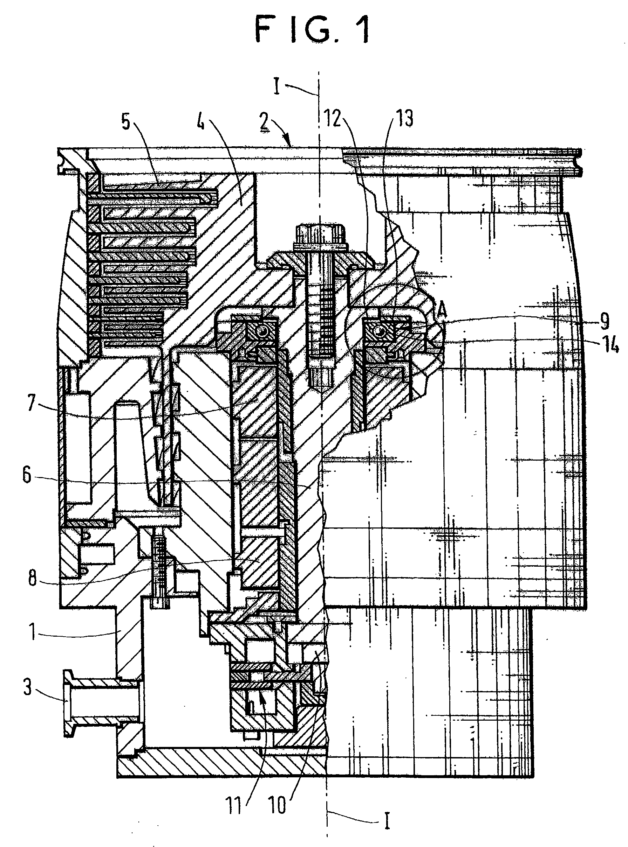

Dans le mode de réalisation de la figure 1, une pompe à vide comprend de façon générale un stator 1 ayant une entrée d'aspiration 2 axiale et une sortie de refoulement 3 radiale. Un rotor 4 est monté à rotation axiale dans le stator 1 selon l'axe longitudinal I-I. Le rotor 4 comprend un système d'aspiration illustré par les ailettes 5, et un arbre 6 tourillonnant dans des paliers du stator 1. On distingue, sur la figure, deux paliers magnétiques radiaux 7 et 8, et deux paliers mécaniques d'atterrissage 9 et 10 à roulement d'atterrissage à action radiale. Pour mémoire, on distingue également un palier magnétique axial 11.

En fonctionnement normal, c'est-à-dire en l'absence d'une sollicitation excessive sur l'arbre 6 de la pompe et en cas de fonctionnement normal des paliers magnétiques, ceux-ci maintiennent correctement en position axiale centrée le rotor 4, et les paliers mécaniques d'atterrissage 9 et 10 ne touchent pas l'arbre 6.

Dans le palier mécanique d'atterrissage 9, on distingue une bague de roulement de rotor 12, disposée à proximité et autour de l'arbre 6 du rotor 4, et une bague coaxiale de roulement de stator 13 disposée au contact du stator 1. Les bagues de roulement de rotor 12 et de stator 13 définissent entre elles un logement de roulement 19. Des éléments roulants 14 tels que des billes, des aiguilles ou tout autre type d'éléments roulants connus, sont disposés dans le logement de roulement 19 entre la bague de roulement de rotor 12 et la bague coaxiale de roulement de stator 13, pour constituer un roulement autorisant la rotation axiale relative des deux bagues de roulement 12 et 13.

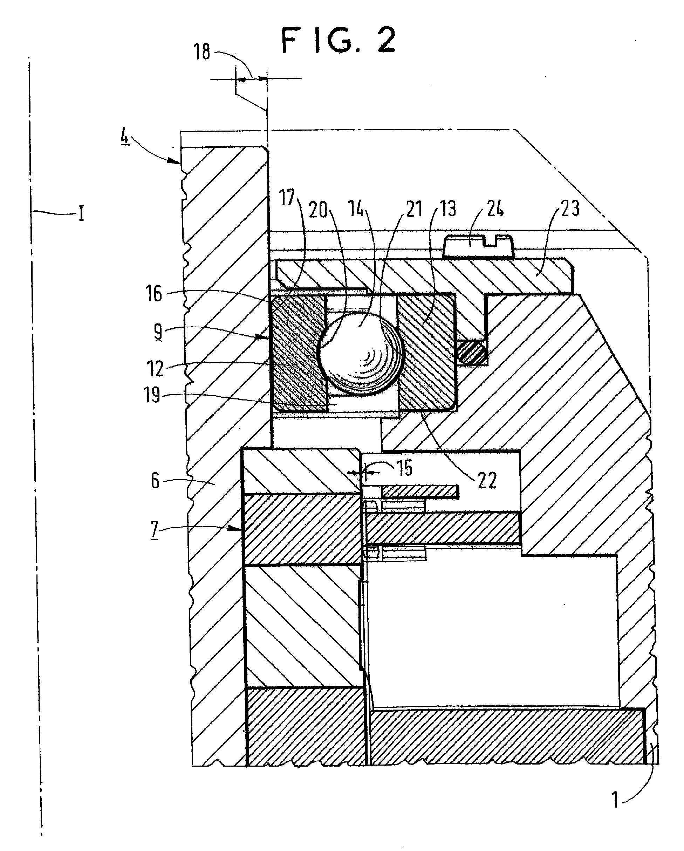

On se référera maintenant à la figure 2, illustrant plus en détail et à plus grande échelle un demi-palier mécanique d'atterrissage 9 en situation entre l'arbre 6 du rotor 4 et une portion correspondante du stator 1. On retrouve l'élément roulant 14 dans le logement de roulement 19 entre la bague de roulement de rotor 12 et la bague coaxiale de roulement de stator 13. L'élément roulant 14 roule sur des pistes de roulement 20 et 21 respectives des bagues de roulement de rotor 12 et de stator 13. On retrouve également le palier magnétique radial 7 qui, en fonctionnement normal, assure le centrage de l'arbre 6 du rotor 4 dans le stator 1 en laissant libre un entrefer 15 annulaire définissant le déplacement radial maximal de l'arbre 6 dans le stator 1. Dans les conditions habituelles, l'entrefer 15 peut être d'environ 0,2 à 0,4 mm par exemple. Le palier mécanique d'atterrissage 9 a pour but de limiter les possibilités de déplacement radial de l'arbre 6 du rotor 4 dans le stator 1 à une valeur nettement inférieure à cet entrefer 15, pour éviter la dégradation des paliers magnétiques en cas d'atterrissage.

Entre la face annulaire intérieure 16 de la bague de roulement de rotor 12 et une première portée d'appui 17 correspondante de rotor 4, on prévoit un jeu radial 18 nettement inférieur à l'entrefer 15 mais seulement légèrement supérieur à la précision de maintien normal centré du rotor 4 par le ou les paliers magnétiques radiaux 7. Cette précision de maintien normal centré du rotor 4 est généralement très bonne, inférieure à quelques microns.

La bague coaxiale de roulement de stator 13 est engagée et fortement freinée ou bloquée en rotation dans un logement frontal du stator 1, entre un épaulement axial 22 et une couronne rapportée de fixation 23 tenue sur le stator 1 par des vis dont on distingue la tête 24.

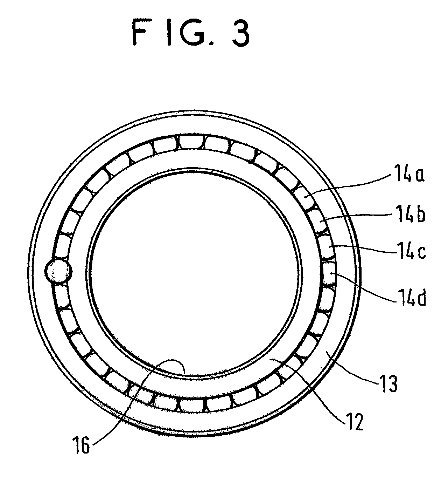

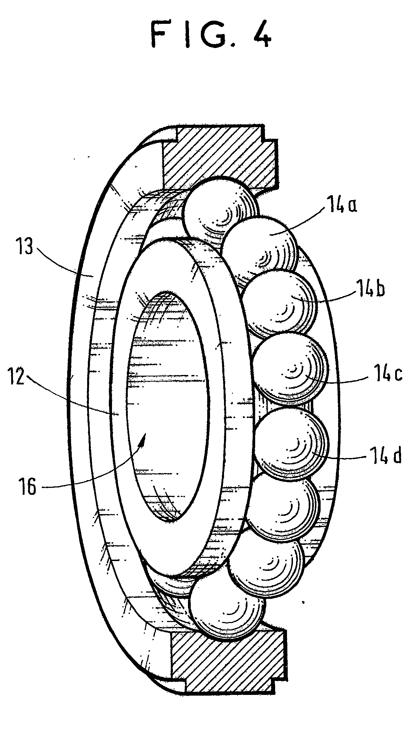

Dans la réalisation illustrée sur les figures 3 et 4, le roulement d'atterrissage comprend des éléments roulants en forme de bille sphérique.

Selon une première possibilité, les éléments roulants comprennent tous une surface externe en dioxyde de zirconium (ZrO₂).

Selon une seconde possibilité, les éléments roulants comprennent une succession alternée d'éléments roulants dont la surface externe est en acier et d'éléments roulants dont la surface externe est en dioxyde de zirconium. Ainsi, à titre d'exemple, les éléments roulants 14a et 14c ont une surface externe en acier, tandis que les éléments roulants 14b et 14d ont une surface externe en dioxyde de zirconium.

Pour les éléments roulants 14a et 14c en acier, on peut avantageusement utiliser un acier inoxydable.

Lors d'un atterrissage, les éléments roulants 14a-14d entrent en rotation, et les éléments roulants adjacents tels que les éléments 14a et 14b viennent en contact l'un de l'autre par une portion de leur surface périphérique, produisant un frottement. Le dioxyde de zirconium favorise le glissement et réduit ainsi les forces de frottement s'opposant à l'accélération rapide du roulement d'atterrissage.

Les pistes de roulement 20 et 21 (figure 2) peuvent être en acier inoxydable.

Dans certaines applications, on peut préférer la présence d'un certain nombre d'éléments roulants 14a, 14c en acier, bon conducteur de la chaleur, qui maintient une capacité de refroidissement suffisante du rotor. On prévoit pour cela que les éléments roulants 14a, 14c en acier restent au contact des pistes de roulement 20, 21 dans les conditions de température normales de fonctionnement.

En d'autres termes, dans ces conditions de température normales de fonctionnement, le diamètre des éléments roulants 14b, 14d en dioxyde de zirconium doit de préférence être au plus égal au diamètre des éléments roulants 14a, 14c en acier.

Lors d'un atterrissage, le fonctionnement est le suivant : initialement, la bague de roulement de rotor 12 ne touche pas l'arbre 6 qui tourne à grande vitesse autour de son axe longitudinal I-I. A l'interruption de fonctionnement des paliers magnétiques radiaux tels que le palier 7, le rotor 4 peut se déplacer radialement selon le premier jeu radial 18 jusqu'à venir en contact de la bague de roulement de rotor 12 qui est initialement immobile et se trouve alors entraînée en rotation et entraîne également en rotation les éléments roulants 14. La bague coaxiale de roulement de stator 13 est bloquée ou au moins freinée en rotation dans le stator 1.

A cause de l'inertie et des frottements dans le roulement d'atterrissage, la bague de roulement de rotor 12 ne prend pas instantanément la vitesse de rotation élevée du rotor 4. Un frottement se produit donc entre la portée d'appui 17 du rotor 4 et la face annulaire intérieure correspondante 16 de la bague de roulement de rotor 12. Grâce à la réduction des frottements existant entre les éléments roulants 14 adjacents, et grâce à la faible inertie des éléments roulants 14, on permet l'accélération rapide de la bague de roulement de rotor 12, et on réduit donc la durée du frottement entre la portée d'appui 17 de rotor 4 et la face annulaire intérieure 16 de la bague de roulement de rotor 12. Simultanément, les éléments roulants 14 en dioxyde de zirconium présentent une bonne résistance aux agressions chimiques des gaz et plasmas de procédés.

La présente invention n'est pas limitée aux modes de réalisation qui ont été explicitement décrits, mais elle en inclut les diverses variantes et généralisations qui sont à la portée de l'homme du métier.

## Revendications

1. Pompe à vide comprenant un rotor (4) mobile en rotation dans un stator (1), avec au moins un palier magnétique radial (7) qui, en fonctionnement normal, maintient en position radiale centrée le rotor (4) dans le stator (1), et avec au moins un palier mécanique d'atterrissage (9) à roulement d'atterrissage qui, à défaut de fonctionnement normal des paliers magnétiques radiaux (7), limite les déplacements radiaux du rotor (4) dans le stator (1) en assurant un centrage approximatif du rotor (4), un jeu radial (18) étant prévu entre l'une des bagues de roulement de rotor (12) ou de stator (13) et une portée d'appui (17) correspondante du rotor (4) ou du stator (1), le roulement d'atterrissage comprenant :
- une bague de roulement de rotor (12) et une bague coaxiale de roulement de stator (13) qui définissent entre elles un logement de roulement (19),
- des éléments roulants (14a, 14b, 14c, 14d) logés les uns à la suite des autres dans le logement de roulement (19) et venant rouler sur des pistes de roulement (20, 21) respectives des bagues de roulement de rotor (12) et de stator (13),
**caractérisée en ce que** certains au moins des éléments roulants comprennent une surface externe en dioxyde de zirconium qui assure à la fois une résistance mécanique satisfaisante et une protection contre les agressions chimiques.

2. Pompe à vide selon la revendication 1, **caractérisée en ce que** lesdits éléments roulants qui comportent une surface externe en dioxyde de zirconium présentent une structure massive entièrement en dioxyde de zirconium.

3. Pompe à vide selon l'une des revendications 1 ou 2, **caractérisée en ce que** les éléments roulants (14, 14a, 14b, 14c, 14d) sont des billes sphériques.

4. Pompe à vide selon l'une quelconque des revendications 1 à 3, **caractérisée en ce que** les éléments roulants (14-14d) présentent tous une surface externe en dioxyde de zirconium.

5. Pompe à vide selon l'une quelconque des revendications 1 à 3, **caractérisée en ce que** les éléments roulants comprennent une succession alternée d'éléments roulants (14a, 14c) en acier et d'éléments roulants (14b, 14d) en dioxyde de zirconium.

6. Pompe à vide selon la revendication 5, **caractérisée en ce que** les éléments roulants (14a, 14c) en acier sont constitués d'acier inoxydable.

7. Pompe à vide selon l'une des revendications 5 ou 6, **caractérisée en ce que** les éléments roulants (14b, 14d) en dioxyde de zirconium ont un diamètre sensiblement égal au diamètre des éléments roulants (14a, 14c) en acier dans les conditions de température normales de fonctionnement.

8. Pompe à vide selon l'une quelconque des revendications 1 à 7, **caractérisée en ce que** les pistes de roulement (20, 21) sont en acier inoxydable.
